# EUROPEAN PATENT APPLICATION

(11) **EP 4 343 955 A1**
(43) Date of publication of application: **27.03.2024**
(21) Application number: 22803900.4
(22) Date of filing: 13.05.2022
(51) Int. Cl.: H01M 50/533, H01M 4/02, H01M 10/04

(54) **TAB PLATE AND WOUND BATTERY**

(30) Priority: 17.05.2021 CN 202110536556
(71) Applicant: Microvast, Inc., Stafford, TX 77477 (US)
(72) Inventor: DENG, Guoyou, Huzhou, Zhejiang 313000 (CN); SHEN, Xiaojie, Huzhou, Zhejiang 313000 (CN); JIN, Yong, Huzhou, Zhejiang 313000 (CN); ZANG, Qingfeng, Huzhou, Zhejiang 313000 (CN); WEI, Xiang, Huzhou, Zhejiang 313000 (CN)
(74) Representative: Zaboliene, Reda
(86) International application number: PCT/CN2022/092887
(87) International publication number: WO 2022/242578

(57) **Abstract**

Provided in the present application is a tab plate (1), comprising a coating area (11) and an empty foil area (12) located on one side of the coating area (11). A boundary line (13) is formed at the connection position between the empty foil area (12) and the coating area (11), the empty foil area (12) is cut to form a plurality of tabs (14) of quadrangular structures, and the four sides of each tab (14) comprise a first side (141), a second side (142) and a third side (143); the third side (143) is located in the empty foil area (12) and is close to the boundary line (13), and the third side (143) is parallel to the boundary line (13) and is at a distance of less than 5 mm from the boundary line (13); and the first side (141) is arranged opposite the second side (142), both the first side (141) and the second side (142) intersect with the third side (143), and an included angle a is formed between the first side (141) and the third side (143), with the included angle a being an acute angle. Further provided in the present application is a wound battery.

## Description

### TECHNICAL FIELD

The present application relates to the technical field of battery technology, and in particular, to a tab plate and a wound battery.

### BACKGROUND

With the development of electronic technology, lithium-ion batteries have been widely used due to their high specific power, long cycle life, good safety performance, and pollution-free advantages. Traditional wound batteries are mainly single tab or multitab wound batteries, while full-tab wound batteries are increasingly recognized due to their low internal resistance and high energy density.

### TECHNICAL PROBLEM

The manufacturing method of full-tab wound batteries usually involves coating one end of the positive and negative electrode plates with active material (the part coated with active material is called the coating area), and leaving the other end as a blank part (the part uncoated with active material, which is called the empty foil area). During the winding process of the positive and negative electrode plates (or after the winding of the positive and negative electrode plates is completed), the full-tab is formed by flattening the blank part.

In the process of bending the blank part inward, in order to flatten the tabs, it is usually necessary to apply significant pressure on the surface perpendicular to the electrode plate (i.e., on the two cylindrical end faces of the cylindrical battery formed after winding), which can easily cause the active materials on the positive and negative electrode plates to fall off, and even cause deformation of the electrode plates, greatly reducing the performance of the wound battery.

### TECHNICAL SOLUTION

The object of the present application is to provide a tab plate and a wound battery, aiming to address the shortcomings of the background mentioned above. By setting the tabs into a quadrilateral structure and forming an acute angle a between the first side and the third side, the rolling pressure required to flatten the tabs can be reduced when the winding direction is the same as the angle a, thereby avoiding the deformation of the tab plate and reducing the falling off of the active materials from the positive and negative electrode plates, so as to greatly improve the yield rate of full-tab wound cells. In addition, since there is no need for significant pressure to flatten the tabs, the stress of bending the tabs 14 can be reduced, thereby ensuring the quality of the wound battery. The wound battery not only has a simple design, but also has good electrical performance, high yield rate, and strong practicality.

An embodiment of the present application provides a tab plate, including a coating area and an empty foil area located on one side of the coating area. A boundary line is formed at a connection position between the empty foil area and the coating area. The empty foil area is cut to form a plurality of tabs of quadrilateral structure, and the plurality of tabs are arranged in sequence along a length direction of the tab plate. Four sides of each tab include a first side, a second side and a third side. The third side is located in the empty foil area and is close to the boundary line, and the third side is parallel to the boundary line and is at a distance of less than 5 mm from the boundary line. The first side is arranged opposite to the second side, and both the first side and the second side intersect with the third side. An angle a is formed between the first side and the third side, and the angle a is an acute angle. Alternatively, the third side is located in the empty foil area and is close to the boundary line, and the third side is parallel to the boundary line and is at a distance of less than 3 mm from the boundary line.

According to the object of the present application, the entire empty foil area is cut to form a plurality of tabs of quadrilateral structure, or the empty foil area is cut partially to form a plurality of tabs of quadrilateral structure.

According to actual operation process, the bending or folding distance of each tab towards the central hole can be consistent or inconsistent; for example, it is possible to fold all tabs with the third side or boundary line as the folding line towards the central hole in order to have a uniform bending or folding distance; it is also possible to use the third side or boundary line as the folding line for some tabs, while other tabs use any position in the empty foil area as the folding line.

In an achievable manner, the tab plate is a positive electrode tab plate and/or a negative electrode tab plate, and a winding direction of the tab plate is the same as an orientation of the angle a.

In an achievable manner, the four sides of each tab also include a fourth side, and the fourth side is away from the boundary line and is arranged opposite to the third side. The fourth side together with the first side, the second side and the third side form a quadrilateral shape.

In an achievable manner, an angle formed between the first side and the fourth side is rounded, and/or an angle formed between the second side and the fourth side is rounded. The intersection of the two sides after being rounded is a smooth transition, which is more conducive to reducing the pressure required to flatten the tabs and reducing tip discharge.

In an achievable manner, the angle a is less than 60°; or the angle a is less than 45°. This angle range is more conducive to reducing the pressure required to flatten the tabs.

In an achievable manner, an angle formed between the second side and the third side is b, the angle b is a right angle or obtuse angle, and the sum of the angle a and the angle b is less than or equal to 180°.

In an achievable manner, the tabs have a parallelogram structure.

In an achievable manner, there is a spacing between every two adjacent tabs, and a length of the spacing is 1/100-1, or 1/10-1/2, or 1/5-1/3 of a length of the tab.

In an achievable manner, the length of the spacing is 0.1 mm-10 mm; or 1 mm-4 mm; or 0.1 mm-1 mm; or 5 mm-8 mm.

In an achievable manner, a ratio of the length to the width of each tab is (1-4):2, or (1-3):2, or 0.5:1.

Another embodiment of the present application also provides a wound battery, including a positive electrode tab plate and a negative electrode tab plate, wherein the positive electrode tab plate and/or the negative electrode tab plate are/is the aforementioned tab plate.

In an achievable manner, the wound battery further includes a first separator, and the first separator is sandwiched between the positive electrode tab plate and the negative electrode tab plate. The positive electrode tab plate, the first separator and the negative electrode tab plate are stacked and wound to form a battery cell. The tabs of the positive electrode tab plate and the tabs of the negative electrode tab plate are respectively located at both ends of the battery cell.

In an achievable manner, a distance of the tabs of the positive electrode tab plate beyond a top end of the first separator after being flattened is 0.5-5 mm, and a distance of the tabs of the negative electrode tab plate beyond a bottom end of the first separator after being flattened is less than 5 mm.

### BENEFICIAL EFFECTS

The tab plate provided in the present application sets the tabs in a quadrilateral structure, and the angle formed between the first side and the third side is an acute angle. During the process of winding the tab plate to form a battery cell, the winding direction of the tab plate is consistent with the orientation of the acute angle. By bending and flattening the tabs towards the central hole while winding the tab plate, the rolling pressure required for flattening the tabs can be effectively reduced, thereby avoiding the deformation of the tab plate and reducing the falling off of the active material from the electrode plate, so as to greatly improve the yield rate of full-tab wound cells. In addition, since there is no need for significant pressure to flatten the tabs, the stress of bending the tabs 14 can be reduced, thereby ensuring the quality of the wound battery. The wound battery not only has a simple design, but also has good electrical performance, high yield rate, and strong practicality.

### BRIEF DESCRIPTION OF THE DRAWINGS

FIG. 1 is a schematic diagram of the structure of the tab plate before cutting in the first embodiment of the present application.
FIG. 2 is a schematic diagram of the structure of the tab plate after cutting in the first embodiment of the present application.
FIG. 3 is an enlarged schematic diagram of the structure at position A in FIG. 2.
FIG. 4 is a schematic diagram of the structure of a single tab in FIG. 3.
FIG. 5 is a schematic diagram of the three-dimensional structure of the wound battery in the first embodiment of the present application.
FIG. 6 is a top view of FIG. 5.
FIG. 7 is a bottom view of FIG. 5.
FIG. 8 is a schematic diagram of the structure of the positive electrode tab plate in FIG. 5.
FIG. 9 is a schematic diagram of the structure of the negative electrode tab plate in FIG. 5.
FIG. 10 is a schematic diagram of the structure of the tab plate in the second embodiment of the present application.
FIG. 11 is a schematic diagram of the structure of the tab plate in the third embodiment of the present application.
FIG. 12 is a schematic diagram of the structure of the tab plate in the fourth embodiment of the present application.
FIG. 13 is a schematic diagram of the structure of the tab plate in the fifth embodiment of the present application.
FIG. 14 is a schematic diagram of the structure of the tab plate in the sixth embodiment of the present application.

### DETAILED DESCRIPTION OF THE EMBODIMENTS

The following will provide a further detailed description of the specific implementations of the present application in conjunction with the accompanying drawings and embodiments. The following embodiments are used to illustrate the present application, but are not intended to limit the scope of the present application.

The terms "first", "second", "third", "fourth", etc. (if any) in the specification and claims of the present application are only used to distinguish similar objects, and are not intended to be used to describe a specific sequence or order.

The terms "up", "down", "left", "right", "front", "back", "top", "bottom" (if any) mentioned in the specification and claims of the present application are defined based on the position of the structure in the figures and the position between the structures in the figures, and only for the clarity and convenience of expressing the technical solution. It should be understood that the use of these directional words should not limit the scope of protection in the present application.

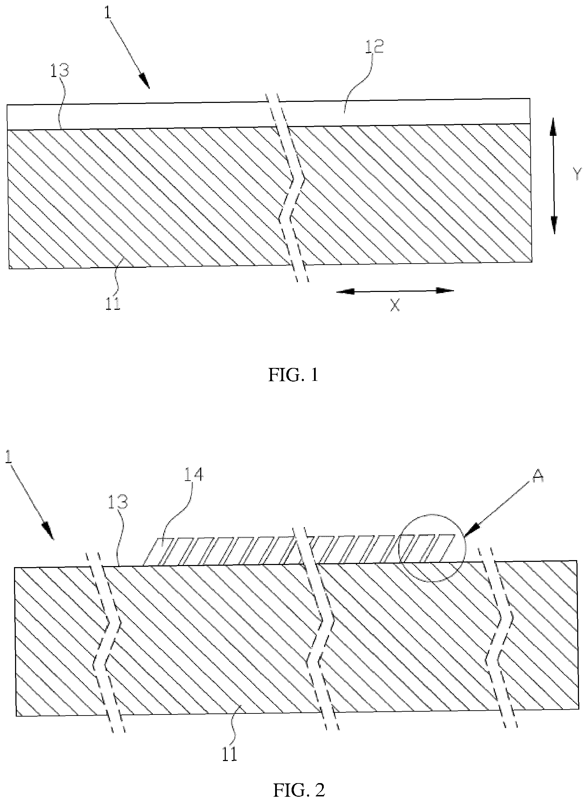

As shown in FIG. 1, an embodiment of the present application provides a tab plate 1, which, before being cut, includes a coating area 11 and an empty foil area 12 located on one side of the coating area 11. A boundary line 13 is formed at the connection position between the empty foil area 12 and the coating area 11. Specifically, the tab plate 1 is a rectangular structure before being cut, with a length direction X and a width direction Y. On the width direction Y of the tab plate 1, the tab plate 1 is divided into a coating area 11 and an empty foil area 12, wherein the coating area 11 is coated with an active material, and the empty foil area 12 is not coated with the active material.

As shown in FIGS. 2 to 4, after cutting the tab plate 1, the empty foil area 12 is cut to form a plurality of tabs 14 of quadrilateral structure, and the plurality of tabs 14 are arranged in sequence along the length direction X of the tab plate 1. The four sides of each tab 14 include a first side 141, a second side 142, and a third side 143. The third side 143 is located in the empty foil area 12 and is close to the boundary line 13. The third side 143 is parallel to the boundary line and is at a distance of less than 5 mm from the boundary line 13. The first side 141 is arranged opposite to the second side 142, and both the first side 141 and the second side 142 intersect with the third side 143. When the distance between the third side 143 and the boundary line 13 is 0 mm, the third side 143 coincides with the boundary line 13. An angle a is formed between the first side 141 and the third side 143, and the angle a is an acute angle.

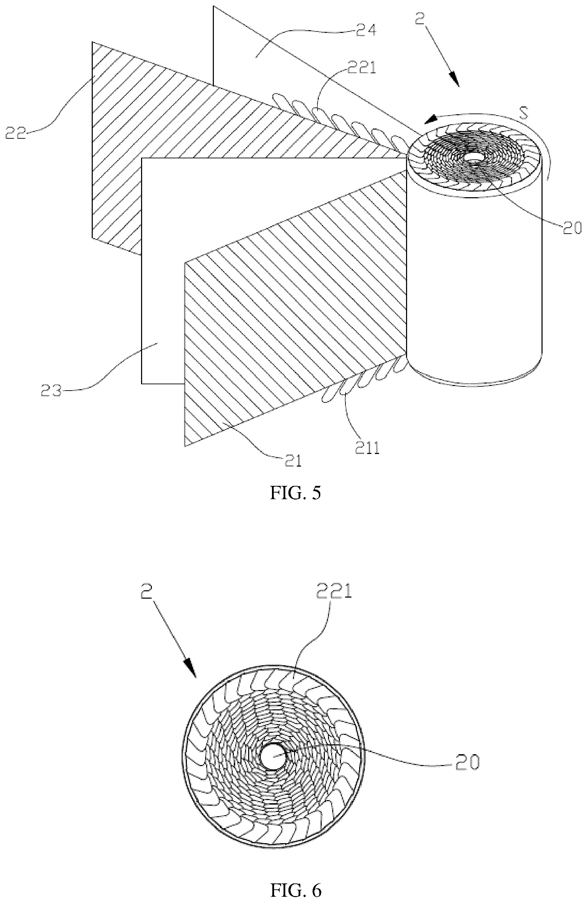

Specifically, the tab plate 1 is a positive electrode tab plate 21 and/or a negative electrode tab plate 22 (the structures of the positive electrode tab plate 21 and the negative electrode tab plate 22 can refer to FIGS. 5, 8, and 9), and the winding direction S of the tab plate 1 is the same as the orientation of the angle a. Referring to FIG. 5, the winding direction S of the positive electrode tab plate 21 and the negative electrode tab plate 22 is counterclockwise as shown in FIG. 5. During the winding process of the positive electrode tab plate 21 and the negative electrode tab plate 22, the orientation of the angle a is the same as the winding direction S. In this embodiment, the tab 14 is set to be a quadrilateral structure, and the angle a formed between the first side 141 and the third side 143 is an acute angle. During the process of winding the tab plate 1 to form a battery cell, the winding direction S of the tab plate 1 is consistent with the orientation of the acute angle, and by bending and flattening the tabs 14 towards the central hole while winding the tab plate 1, the rolling pressure required for flattening the tabs 14 can be effectively reduced, thereby avoiding the deformation of the coating area 11 of the tab plate 1 and reducing the falling off of the active material from the tab plate 1, so as to greatly improve the yield rate of full-tab wound cells.

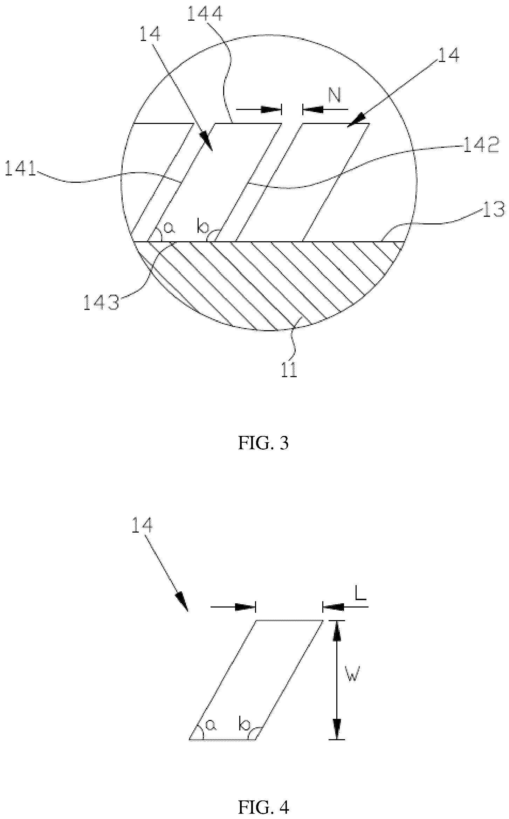

As shown in FIG. 3, as an embodiment, the four sides of each tab 14 also include a fourth side 144. The fourth side 144 is away from the boundary line 13 and is arranged opposite to the third side 143. The fourth side 144 together with the first side 141, the second side 142 and the third side 143 form a quadrilateral shape.

As shown in FIG. 3, as an embodiment, the third side 143 coincides with the boundary line 13, and the fourth side 144 is parallel to the third side 143.

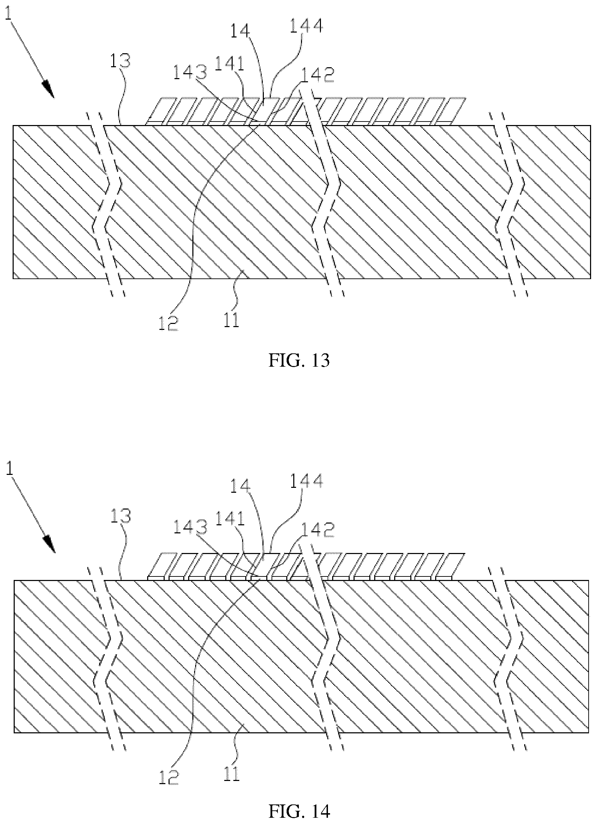

Of course, the third side 143 may not coincide with the boundary line 13. As shown in FIG. 13, as an embodiment, the third side 143 and the boundary line 13 are separated from each other, and the empty foil area 12 between the third side 143 and the boundary line 13 is a parallelogram structure. As shown in FIG. 14, as another embodiment, the third side 143 and the boundary line 13 are separated from each other, and the empty foil area 12 between the third side 143 and the boundary line 13 is a rectangular structure.

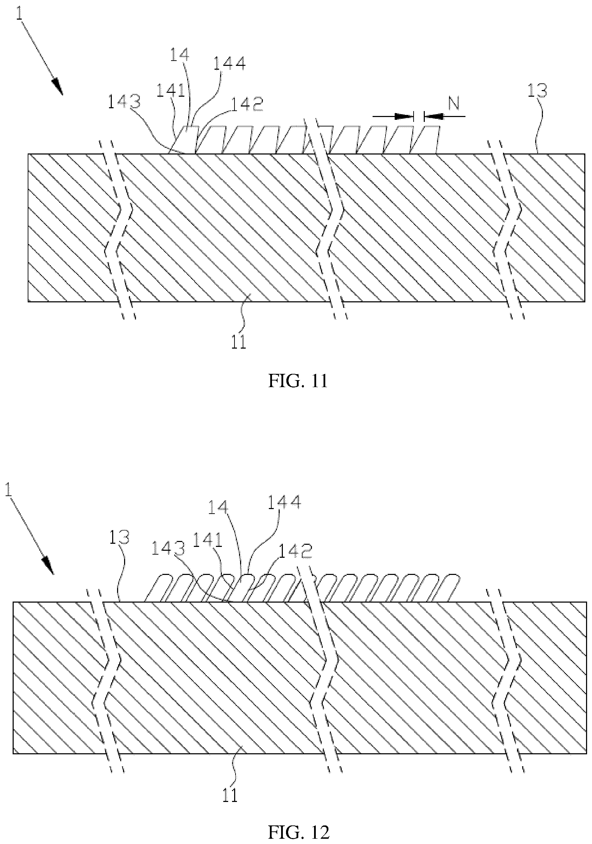

As shown in FIG. 12, as an embodiment, the angle formed between the first side 141 and the fourth side 144 is rounded, and the angle formed between the second side 142 and the fourth side 144 is also rounded. The intersection of the two sides after being rounded is a smooth transition, which is more conducive to reducing the pressure required to flatten the tabs 14 and reducing tip discharge.

As shown in FIG. 3, as an embodiment, the angle formed between the second side 142 and the third side 143 is b, and the angle b is a right or obtuse angle. The sum of the angle a and the angle b is less than or equal to 180°.

As another embodiment, in this embodiment, the angle b is an obtuse angle, and the sum of the angle a and the angle b is equal to 180°. That is, in this embodiment, the tab 14 is a parallelogram structure.

As shown in FIGS. 3 and 4, as an embodiment, the angle a formed between the first side 141 and the third side 143 is less than 60°.

As another embodiment, the angle a is greater than or equal to 15° and less than or equal to 45°.

As shown in FIGS. 2 to 4, as an embodiment, there is a spacing between every two adjacent tabs 14, and the length N of the spacing is 1/10-1/2 of the length L of the tab 14 (i.e., the length of the third side 143 or the fourth side 144).

As another embodiment, the length N of the spacing is 1/100-1, or 1/10-1/2, or 1/5-1/3 of the length L of the tab 14.

As an embodiment, the length N of the spacing is 0.1 mm-10 mm.

As shown in FIG. 4, as an embodiment, the ratio of the length L to the width W of each tab 14 is (1-4):2.

As another embodiment, the ratio of the length L to the width W of each tab 14 is (1-3):2 or 0.5:1.

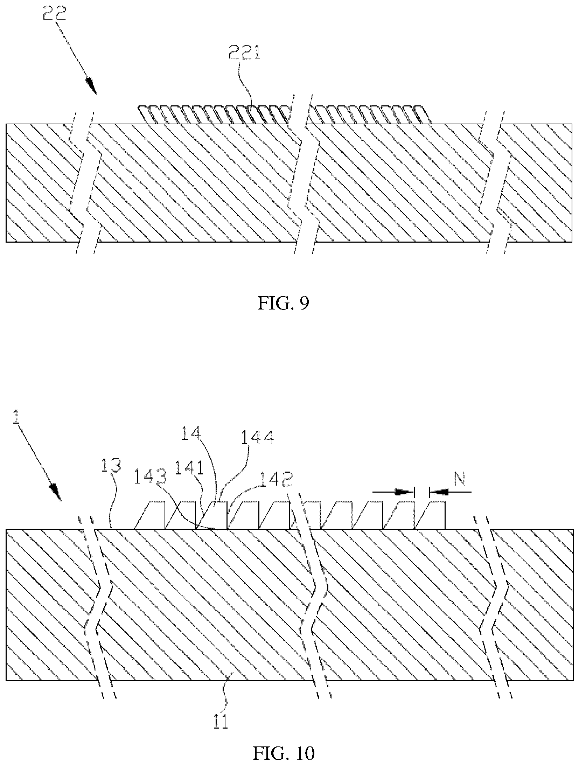

Of course, in other embodiments, the tabs 14 can also be of other shapes, such as a trapezoidal structure. As shown in FIG. 10, the angle formed between the first side 141 and the third side 143 is an acute angle, and the angle formed between the second side 142 and the third side 143 is a right angle, that is, the tab 14 is a right angled trapezoidal structure. Meanwhile, from left to right, in every two adjacent tabs 14, the end of the second side 142 of the previous tab 14 close to the boundary line 13 is connected to the end of the first side 141 of the latter tab 14 close to the boundary line 13 (that is, there is no gap between the two ends). Due to the trapezoidal structure of the tabs 14, the end of the second side 142 of the previous tab 14 away from the boundary line 13 is separated from the end of the first side 141 of the latter tab 14 away from the boundary line 13, and the length N of the spacing is 1/10-1/2 of the length of the third side 143.

As shown in FIG. 11, in another embodiment, the angle formed between the first side 141 and the third side 143 is an acute angle, the angle formed between the second side 142 and the third side 143 is an obtuse angle, and the sum of the acute angle and the obtuse angle is less than 180°, that is, the tab 14 is an obtuse trapezoidal structure. Meanwhile, from left to right, in every two adjacent tabs 14, the end of the second side 142 of the previous tab 14 close to the boundary line 13 is connected to the end of the first side 141 of the latter tab 14 close to the boundary line 13 (that is, there is no gap between the two ends). Due to the trapezoidal structure of the tabs 14, the end of the second side 142 of the previous tab 14 away from the boundary line 13 is separated from the end of the first side 141 of the latter tab 14 away from the boundary line 13, and the length N of the spacing is 1/10-1/2 of the length of the third side 143.

As shown in FIGS. 5 to 9, this embodiment also provides a wound battery, which includes a positive electrode tab plate 21 and a negative electrode tab plate 22. The positive electrode tab plate 21 and the negative electrode tab plate 22 are both the aforementioned tab plate 1.

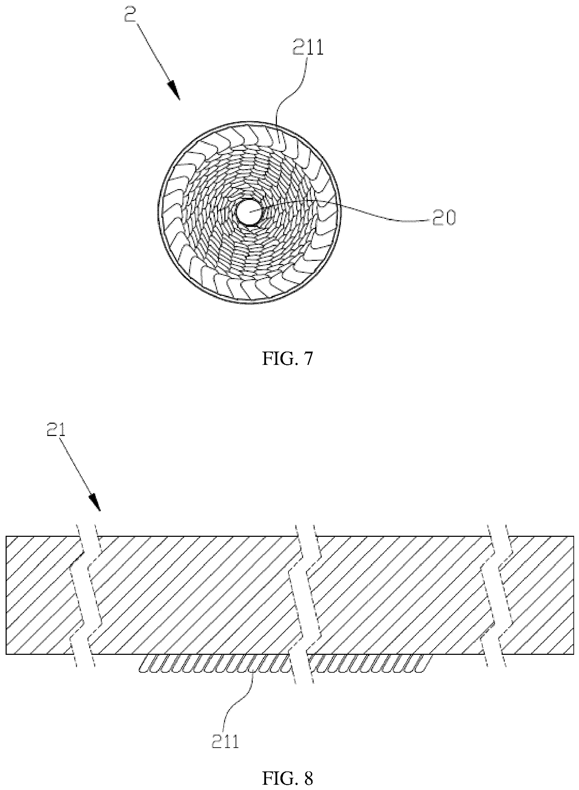

As shown in FIG. 5, as an embodiment, the wound battery also includes a first separator 23, and the first separator 23 is sandwiched between the positive electrode tab plate 21 and the negative electrode tab plate 22. The positive electrode tab plate 21, the first separator 23 and the negative electrode tab plate 22 are stacked and wound to form a battery cell 2. The tabs 211 of the positive electrode tab plate 21 and the tabs 221 of the negative electrode tab plate 22 are respectively located at both ends of the battery cell 2. As shown in FIGS. 6 and 7, after completing the winding and flattening of the tabs 211/221, the tabs 211 of the positive electrode tab plate 21 and the tabs 221 of the negative electrode tab plate 22 are respectively overlapped to form a circular structure.

Specifically, as shown in FIGS. 5, 8, and 9, the orientation of the angle a on the tabs 211 of the positive electrode tab plate 21 and the orientation of the angle a on the tabs 221 of the negative electrode tab plate 22 are both the same as the winding direction S. During the winding process of the battery cell 2, by flattening the tabs 211/221 towards the central hole 20 while winding the positive and negative electrode tab plates 21/22, the rolling pressure required for flattening the tabs 211/221 can be effectively reduced, thereby avoiding the deformation of the positive and negative electrode tab plates 21/22 and reducing the falling off of the active materials from the positive and negative electrode tab plates 21/22, so as to greatly improve the yield rate of full-tab wound cells.

As an embodiment, as shown in FIGS. 8 and 9, both the tabs 211 of the positive electrode tab plate 21 and the tabs 221 of the negative electrode tab plate 22 are rounded. The intersection of the two sides after being rounded is a smooth transition, which is more conducive to reducing the pressure required to flatten the tabs 211/221 and reducing tip discharge.

As an embodiment, the wound battery also includes a second separator 24. The positive electrode tab plate 21, the first separator 23, the negative electrode tab plate 22 and the second separator 24 are sequentially stacked from inside to outside, and are wound to form a battery cell 2 after the four are stacked.

As an embodiment, a distance of the tabs 211 of the positive electrode tab plate 21 beyond a top end of the first separator 23 after being flattened is 0.5-5 mm, and a distance of the tabs 221 of the negative electrode tab plate 22 beyond a bottom end of the first separator 23 after being flattened is less than 5 mm.

As another embodiment, the distance of the tabs 211 of the positive electrode tab plate 21 beyond the top end of the first separator 23 after being flattened is less than 3 mm, and the distance of the tabs 221 of the negative electrode tab plate 22 beyond the bottom end of the first separator 23 after being flattened is less than 3 mm.

As another embodiment, the distance of the tabs 211 of the positive electrode tab plate 21 beyond the top end of the first separator 23 after being flattened is less than 3 mm and greater than 1.5 mm, and the distance of the tabs 221 of the negative electrode tab plate 22 beyond the bottom end of the first separator 23 after being flattened is less than 3 mm and greater than 1.5 mm.

This embodiment also provides a preparation method for a wound battery, and the method specifically includes: coating the positive electrode tab plate 21 and the negative electrode tab plate 22 using a coating machine to ensure that an empty foil area is formed on both the positive electrode tab plate 21 and the negative electrode tab plate 22; cutting the empty foil area(s) of the positive electrode tab plate 21 and/or the negative electrode tab plate 22 into a plurality of quadrilateral tabs 211/221 through laser cutting; then, winding the positive electrode tab plate 21, the negative electrode tab plate 22 and the separator 23/24 into a cylindrical shape, and bending and flattening the tabs 211/221 towards the central hole 20 during the winding process.

The tab plate 1 with tabs provided in this embodiment of the present application sets the tabs 14 in a quadrilateral structure, and the angle a formed between the first side 141 and the third side 143 is an acute angle. During the process of winding the tab plate 1 to form a battery cell, the winding direction S of the tab plate 1 is consistent with the orientation of the acute angle. By bending and flattening the tabs 14 towards the central hole while winding the tab plate 1, the rolling pressure required for flattening the tabs 14 can be effectively reduced, thereby avoiding the deformation of the tab plate 1 and reducing the falling off of the active material from the tab plate 1, so as to greatly improve the yield rate of full-tab wound cells. In addition, since there is no need for significant pressure to flatten the tabs 14, the stress of bending the tabs 14 can be reduced, thereby ensuring the quality of the wound battery. The wound battery not only has a simple design, but also has good electrical performance, high yield rate, and strong practicality.

The above are only the specific embodiments of the present application, but the scope of protection of the present application is not limited to this. Any technical personnel familiar with this technical field who can easily think of changes or replacements within the scope of technology disclosed in the present application should be covered within the scope of protection of the present application. Therefore, the protection scope of the present application should be based on the protection scope of the claims.

## Claims

1. A tab plate, comprising a coating area (11) and an empty foil area (12) located on one side of the coating area (11), a boundary line (13) being formed at a connection position between the empty foil area (12) and the coating area (11), wherein the empty foil area (12) is cut to form a plurality of tabs (14) of quadrilateral structure, and the plurality of tabs (14) are arranged in sequence along a length direction (X) of the tab plate (1), four sides of each tab (14) comprise a first side (141), a second side (142) and a third side (143), the third side (143) is located in the empty foil area (12) and is close to the boundary line (13), and the third side (143) is parallel to the boundary line (13) and is at a distance of less than 5 mm from the boundary line (13); the first side (141) is arranged opposite to the second side (142), and both the first side (141) and the second side (142) intersect with the third side (143), an angle a is formed between the first side (141) and the third side (143), and the angle a is an acute angle.

2. The tab plate as claimed in claim **1,** wherein the tab plate (1) is a positive electrode tab plate (21) and/or a negative electrode tab plate (22), and a winding direction (S) of the tab plate (1) is the same as an orientation of the angle a.

3. The tab plate as claimed in claim **1,** wherein the four sides of each tab (14) also comprise a fourth side (144), the fourth side (144) is away from the boundary line (13) and is arranged opposite to the third side (143), the fourth side (144) together with the first side (141), the second side (142) and the third side (143) form a quadrilateral shape.

4. The tab plate as claimed in claim **3,** wherein an angle formed between the first side (141) and the fourth side (144) is rounded, and/or an angle formed between the second side (142) and the fourth side (144) is rounded.

5. The tab plate as claimed in claim **1,** wherein an angle formed between the second side (142) and the third side (143) is b, the angle b is a right angle or obtuse angle, and the sum of the angle a and the angle b is less than or equal to 180°.

6. The tab plate as claimed in claim **1,** wherein the tabs (14) have a parallelogram structure.

7. The tab plate as claimed in any one of claims **1** to **6,** wherein there is a spacing between every two adjacent tabs (14), and a length (N) of the spacing is 1/10-1/2 of a length (L) of the tab (14).

8. The tab plate as claimed in claim **7,** wherein the length (N) of the spacing is 0.1 mm-10 mm.

9. The tab plate as claimed in any one of claims **1** to **6,** wherein a ratio of the length (L) to the width (W) of each tab (14) is (1-4):2.

10. A wound battery, comprising a positive electrode tab plate (21) and/or a negative electrode tab plate (22), wherein the positive electrode tab plate (21) and/or the negative electrode tab plate (22) are/is the tab plate (1) as claimed in any one of claims **1** to **9.**

11. The wound battery as claimed in claim **10,** wherein the wound battery further comprises a first separator (23), the first separator (23) is sandwiched between the positive electrode tab plate (21) and the negative electrode tab plate (22), wherein the positive electrode tab plate (21), the first separator (23) and the negative electrode tab plate (22) are stacked and wound to form a battery cell (2), tabs (211) of the positive electrode tab plate (21) and tabs (221) of the negative electrode tab plate (22) are respectively located at both ends of the battery cell (2).

12. The wound battery as claimed in claim **11,** wherein a distance of the tabs (211) of the positive electrode tab plate (21) beyond a top end of the first separator (23) after being flattened is 0.5-5 mm, and a distance of the tabs (221) of the negative electrode tab plate (22) beyond a bottom end of the first separator (23) after being flattened is less than 5 mm.
